# FASCICULE DE BREVET EUROPEEN

(11) **EP 0 577 826 B1**
(45) Date de publication et mention de la délivrance du brevet: **04.12.1996**
(21) Numéro de dépôt: 93905368.2
(22) Date de dépôt: 01.02.1993
(51) Int. Cl.: B65G 1/04, B60P 3/00, B60P 7/16, A01D 90/00

(54) **DISPOSITIF POUR FACILITER LE TRANSPORT DES REGIMES DE BANANES LORS DE LEUR RECOLTE**
VORRICHTUNG ZUR ERLEICHTERUNG DES TRANSPORTES VON BANANENBUESCHELN WAEHREND DER ERNTE
DEVICE FOR FACILITATING THE TRANSPORTATION OF BUNCHES OF BANANAS AT THE TIME OF HARVEST

(30) Priorité: 30.01.1992 FR 9201189
(43) Date de publication de la demande: 12.01.1994
(73) Titulaire: FISCHBACH SARL, F-08310 Juniville (FR)
(72) Inventeur: FISCHBACH, Gérard, F-08310 Juniville (FR)
(74) Mandataire: Mayran, Ninon Avocat
(86) Numéro de dépôt international: FR9300106
(87) Numéro de publication internationale: WO9315000

(56) Documents cités:
- CH-A- 550 100
- FR-A- 2 531 918
- FR-A- 2 651 759
- FR-E- 89 744
- US-A- 3 115 977

## Description

La présente invention a pour objet un dispositif facilitant le transport de régimes de bananes après la récolte de ceux-ci (voir par exemple CH-A-550 100 ou FR-A-2 651 759).

Les bananes sont des fruits fragiles et il est nécessaire de prendre de multiples précautions pour les transporter.

L'inadaptation des moyens actuels de transport des bananes génère une perte importante, notamment au niveau du transport de la plantation jusqu'au lieu de tri et de conditionnement.

La présente invention vise à remédier à ces inconvénients en proposant un dispositif de transport des régimes de bananes, de conception et d'utilisation simples.

Le dispositif de transport de régimes de bananes objet de l'invention est adapté sur une remorque attelable, à suspension souple, tant de l'essieu que de la flèche.

Il comporte des montants verticaux latéraux qui supportent à leur extrémité supérieure deux glissières, une de chaque côté, parallèles à la plate-forme, de section en U, créant deux gorges en vis-à-vis.

Ces glissières sont pliées en épingle à cheveux, parties courbées à l'arrière de la remorque, de manière à créer deux niveaux parallèles de glissement dans le même plan vertical.

Entre ces deux glissières s'étendent, régulièrement espacées, des traverses munies à chacune de leurs extrémités de galets fous roulant dans les gorges desdites glissières, et solidarisées à des chaînes reliées à un dispositif d'entraînement, mu par motorisation ou manuellement.

Les traverses peuvent ainsi rouler par leurs extrémités dans les gorges en U et passer d'un niveau à l'autre.

Ces traverses supportent, régulièrement espacées, des tiges à l'extrémité de chacune desquelles est solidarisé un bloc amortisseur en matière souple, du type mousse de polyuréthanne.

D'autre part, entre deux tiges successives est solidarisé à la traverse un moyen d'accrochage d'un régime de bananes.

L'utilisation du dispositif selon l'invention se déroule de la manière suivante : les traverses étant toutes au départ au niveau supérieur des glissières, les tiges porteuses des blocs amortisseurs dirigées vers le haut, la première traverse est amenée au niveau inférieur des glissières, les blocs amortisseurs qu'elle supporte basculant alors en venant en position verticale sous ladite traverse. On amène ensuite la deuxième traverse dans la courbure des glissières, ses blocs amortisseurs se trouvant alors en position horizontale, puis on suspend les régimes de bananes aux crochets de cette traverse. Lorsque tous les crochets de cette traverse sont chargés on fait avancer les chaînes, ce qui d'une part amène les blocs amortisseurs de ladite traverse contre les régimes qui viennent d'être accrochés et qui se trouvent ainsi pris entre deux rangées de blocs amortisseurs, et d'autre part place la traverse suivante dans la courbure des glissières, blocs amortisseurs à l'horizontale, et ainsi de suite.

Avantageusement les tiges porteuses des blocs amortisseurs sont télescopiques de manière à occuper moins de place lorsqu'elles sont en position d'attente sur le dessus de la remorque.

Les avantages et les caractéristiques de la présente invention ressortiront plus clairement de la description qui suit et qui se rapporte au dessin annexé, lequel en représente un mode de réalisation non limitatif.

Dans le dessin annexé:
- la figure la représente une vue de profil du dispositif selon l'invention.
- la figure 1b représente une vue en coupe selon l'axe XX' porté sur la figure la.
- la figure 2 représente une vue partielle, de face, d'une rangée de blocs amortisseurs suspendus à une traverse du dispositif selon l'invention.
- la figure 3 représente une vue partielle schématique, vue de dessus, de régimes de bananes rangés entre les blocs amortisseurs.
- la figure 4 représente une vue partielle de profil d'un moyen d'accrochage d'un régime de bananes.

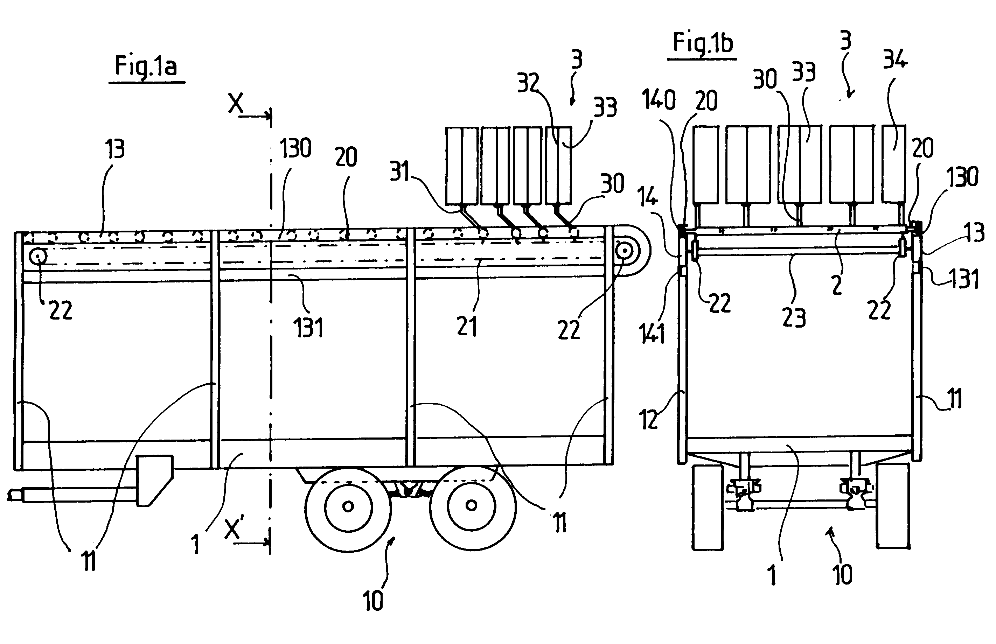

Si on se réfère aux figures 1a et 1b on peut voir que le dispositif selon l'invention est adapté sur une plate-forme 1 montée sur un train roulant 10, et qu'il comporte, solidarisées à cette plate-forme 1 par l'intermédiaire de montants verticaux 11 et 12 , des glissières en regard 13 et 14.

Ces glissières 13 et 14 sont de section transversale en U et sont pliées en épingle à cheveux, créant ainsi pour chacune d'elles deux chemins de roulement parallèles 130 et 131, respectivement 140 et 141.

Dans ces glissières 13 et 14 sont engagées les extrémités, munies de galets fous 20, de traverses 2, solidarisées à des chaînes 21 tendues entre des roues dentées 22 disposées aux deux extrémités des glissières 13 et 14 et réunies entre elles, deux à deux, par des axes 23, les chaînes 21 étant parallèles aux glissières 13 et 14 et mobiles en translation soit manuellement soit par une motorisation, permettant ainsi de faire passer l'une après l'autre, à une vitesse déterminée, les traverses 2 des chemins de roulement 130 et 140 aux chemins de roulement 131 et 141, et réciproquement.

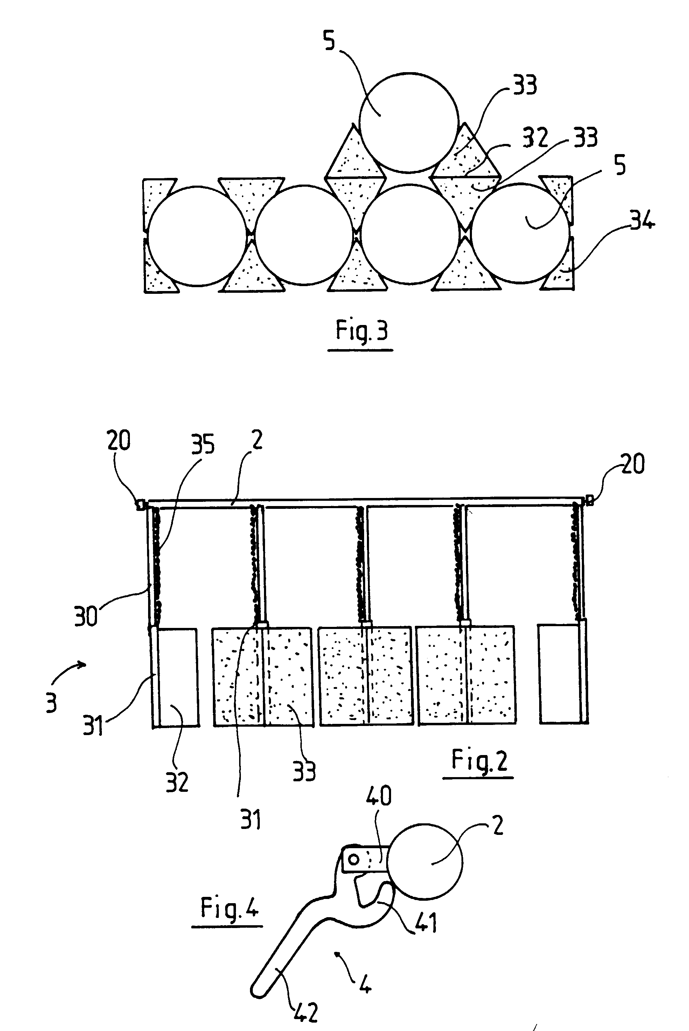

Si on se réfère également à la figure 2 on peut voir que chaque traverse 2 comporte des ensembles amortisseurs 3 chacun constitué d'une tige 30 montée coulissante dans un tube 31 sur lequel est solidarisée une plaque métallique 32 positionnée transversalement par rapport à la plate-forme 1.

Sur les plaques métalliques 32 sont fixés de part et d'autre des blocs amortisseurs 33, par exemple en mousse de polyuréthanne, de section triangulaire, de manière à former ensemble un bloc de section approximativement en losange, dont les diagonales sont parallèles aux côtés de la plate-forme.

Les ensembles amortisseurs 3 des extrémités des traverses 2 comportent des plaques 32 de dimensions réduites de moitié dans le sens de la largeur, auxquelles sont solidarisés des blocs amortisseurs 34, dont la forme semblable est celle d'un bloc amortisseur 33 que l'on aurait coupé selon sa hauteur.

De même les plaques 32 des ensembles amortisseurs 3 des traverses 2 extrêmes ne sont garnies de blocs amortisseurs 33 que d'un côté.

Les tiges 30 sont coudées, et solidarisées par leur extrémité supérieure aux traverses 2, de manière à ce que lorsqu'un ensemble amortisseur 3 pend sous une traverse 2 et que la plaque 32 est en position verticale, son axe ne passe pas par la traverse 2 mais se trouve en arrière de celle-ci.

Lorsque les traverses 2 sont dans les chemins de roulement supérieurs 130 et 140, les plaques 32 se trouvent en position verticale au-dessus des glissières 13 et 14, et le tube 31 coulisse sur la tige 30 jusqu'au coude de celle-ci.

Lors du passage du niveau supérieur au niveau inférieur d'une traverse 2, le tube 31 coulisse sur la tige 30, une chaîne 35 de longueur déterminée limitant ce coulissement et permettant de positionner à la hauteur adéquate les blocs amortisseurs 33.

Si on se réfère également à la figure 4 on peut voir que le moyen d'accrochage 4 d'un régime de bananes comporte d'une part une patte 40 solidarisée radialement à une traverse 2, entre deux tiges 30, non visibles sur la figure. A l'extrémité de la patte 40 peut pivoter, par une de ses extrémités, un crochet 41 en forme de croissant, tandis que l'autre extrémité peut, grâce au pivotement, venir en contact avec la traverse 2. Le crochet 41 est introduit dans une ouverture pratiquée dans l'extrémité supérieure du tronc du régime de bananes, le poids de celui-ci assurant le verrouillage du dispositif, tandis que le décrochage du régime s'effectue en soulevant une poignée 42 solidaire du crochet 41.

Si on se réfère maintenant à la figure 3 on peut voir que les régimes de bananes 5 sont tous suspendus encastrés entre des blocs amortisseurs 33 ou 34 et qu'ils ne peuvent ainsi être endommagés pendant leur transport.

Le déchargement des régimes de bananes est réalisé en effectuant la manoeuvre inverse, c'est-à-dire en faisant passer les traverses 2 du niveau inférieur au niveau supérieur, les régimes 5 étant décrochés à l'arrière de la remorque lorsque les ensembles amortisseurs sont en position horizontale, le crochet 40 s'ouvrant par pivotement sous le poids du régime.

Il va de soi que la présente invention ne saurait être limitée à la description qui précède d'un de ses modes de réalisation, susceptible de subir un certain nombre, de modifications sans pour autant sortir du cadre des revendications.

## Revendications

1. Dispositif pour faciliter le transport des régimes de bananes lors de leur récolte, comportant deux glissières horizontales (13, 14) en épingle à cheveux, créant deux niveaux de roulement (130, 131 ; 140, 141), solidarisées à la plate-forme (1) d'une remorque par l'intermédiaire de montants verticaux latéraux (11, 12), et entre lesquelles des traverses horizontales (2) peuvent se déplacer, dans un mouvement de translation les faisant passer d'un niveau à l'autre dans les niveaux de roulement (130, 140 ; 131, 141) desdites glissières (13, 14) et sous l'action de chaînes (21) auxquelles les traverses (2) sont solidarisées et grâce auxquelles elles peuvent se déplacer par l'intermédiaire de roues dentées (22), les traverses étant munies à leurs extrémités de galets fous (20) roulant dans lesdites glissières (13, 14), des ensembles amortisseurs (3) étant solidarisés aux traverses et, entre deux ensembles amortisseurs (3), des moyens d'accrochage (4) des régimes de bananes étant solidarisés aux traverses (2).

2. Dispositif selon la revendication 1 caractérisé en ce qu'un ensemble amortisseur (3) comporte une tige (31), solidarisée par une de ses extrémités à une traverse (2), et sur laquelle peut coulisser un tube (31) auquel est solidarisée une plaque métallique (32) sur chacune des faces de laquelle est fixé un bloc amortisseur (33) de section triangulaire, de manière que cet assemblage soit de section sensiblement en forme d'un losange dont les diagonales sont parallèles aux côtés de la plate-forme (1).

3. Dispositif selon la revendication 2, caractérisé en ce que les ensembles amortisseurs (3) placés aux extrémités de chaque traverse (2) comportent des plaques (32) réduites de moitié sur lesquelles sont solidarisés des blocs amortisseurs (34) de forme triangulaire correspondant à la moitié d'un bloc amortisseur (33) coupé selon sa hauteur.

4. Dispositif selon la revendication 2 caractérisé en ce que l'allongement d'un ensemble amortisseur (3) par coulissement du tube (31) sur la tige (30) est limité par une chaîne (35) solidarisée par ses extrémités d'une part à la traverse (2) et d'autre part audit tube (31).

5. Dispositif selon la revendication 1 caractérisé en ce que le moyen d'accrochage (4) d'un régime de bananes (5) comporte un crochet (41) en forme de croissant, monté pivotant par une de ses extrémité sur une patte (40) solidaire radialement de la traverse (2), ledit crochet (41) étant introduit dans une ouverture pratiquée dans le tronc d'un régime de bananes (5) dont le poids verrouille le moyen de d'accrochage en amenant l'extrémité non pivotante dudit crochet au contact de ladite traverse (2).

## Patentansprüche

1. Vorrichtung zur Vereinfachung der Beförderung der Bananenzweige bei der Ernte derselben mit zwei horizontalen haarförmigen Gleitschienen (13,14), die zwei mit der Plattform (1) eines Anhängers durch seitliche vertikale Pfosten (11, 12) fest verbundene Laufebenen (130, 131 ; 140, 141) schafft, und zwischen denen horizontale Querträger (2) sich in einer Schiebebewegung bewegen können, in dem sie von einer Ebene zu der anderen in den Laufebenen (130, 140 ; 131, 141) der besagten Gleitschienen (13, 14) hin und her geschoben werden und unter der Wirkung von Ketten (21), mit denen die Querträger (2) fest verbunden sind und mit Hilfe von denen sie sich über Zahnräder (22) bewegen können, wobei die Querträger (2) an ihren Enden mit in den besagten Gleitschienen (13,14) laufenden losen Rollen (20) versehen sind, wobei Dämpfereinheiten (3) mit den Querträgern (2) fest verbunden sind und wobei zwischen zwei Dämpfereinheiten (3) angeordnete Bananenzweiganhängemittel (4) mit den Querträgern (2) fest verbunden sind.

2. Vorrichtung nach Anspruch 1, dadurch gekennzeichnet, daß eine Dämpfereinheit (3) eine Stange (30) aufweist, die an einem ihrer Enden mit einem Querträger (2) fest verbunden ist und an welche ein Rohr (31) gleiten kann, mit dem eine Metallplatte (32) fest verbunden ist, auf deren jeder Seite ein Dämpferblock (33) befestigt ist, dessen Querschnitt dreieckig ist, so daß diese Anordnung einen Querschnitt aufweist, der wesentlich in Form einer Raute ist, deren Diagonalen parallel zu der Seiten der Plattform (1) sind.

3. Vorrichtung nach Anspruch 2, dadurch gekennzeichnet, daß die an den Enden jedes Querträgers (2) angebrachten Dämpfereinheiten (3) zur Hälften reduzierte Platten (32) umfaßen, an welchen Dämpferblöcke (34) fest verbunden sind, deren dreieckige Form der Hälfte eines der Höhe nach geschnittenen Dämpferblocks (33) entspricht.

4. Vorrichtung nach Anspruch 2, dadurch gekennzeichnet, daß die Verlängerung einer Dämpfereinheit (3) durch Verschiebung des Rohres (31) an der Stange (30) durch eine Kette (35) begrenzt wird, die an ihren Enden einerseits mit dem Querträger (2) und andererseits mit dem besagten Rohr (31) fest verbunden ist.

5. Vorrichtung nach Anspruch 1, dadurch gekennzeichnet, daß das Mittel (4) zum Anhängen eines Bananenzweiges (5) einen sichelförmigen Haken (41) aufweist, der mit einer seinen Enden schwenkbar auf einer radial mit dem Querträger (2) verbundenen Lasche (40) angeordnet ist, wobei der besagte Haken (41) in eine in den Stumpf des Bananenzweiges (5) eingebrachte Öffnung eingeführt ist, dessen Gewicht das Anhängemittel verriegelt, indem das unschwenkbare Ende des besagten Hakens mit dem besagten Querträgers (2) in Kontakt gebracht wird.

## Claims

1. Device to facilitate the transportation of bunches of bananas after being picked up and comprising two horizontal hairpin slides (13, 14) creating two rolling levels (130, 131 ; 140, 141) rendered integral with the platform (1) of a trailer by means by lateral vertical stanchions (11, 12) and between which the crosspieces (2) are able to translation-move making them pass from one level to the other in the roller levels (130, 140 ; 131, 141) of said slides (13, 14) and under the action of chains (21) with which the crosspieces (2) are rendered integral and by which they are able to move by means of toothed wheels (22) of the horizontal crosspieces (2), the crosspieces (2) being fitted at their extremities with loose rollers (20) rolling in said slides (13, 14) of the shock absorber units (3) being rendered integral with the crosspieces (2), and, between two shock absorber units (3), means (4) for hooking the banana bunches and rendered integral with the crosspieces (2).

2. Device according to claim 1, wherein a shock absorber unit (3) comprises a rod (31) rendered integral via one of its extremities with a crosspiece (2) and on which a tube (31) is able to slide and rendered integral with a metallic plate (32), a shock absorber with a triangular section being secured to each of the faces of said plate so that the section of this assembly has a lozenge shape and whose diagonals are parallel to the sides of the platform (1).

3. Device according to claim 2, wherein the shock absorber units (3) placed at the extremities of each crosspiece (2) comprise half-sized plates (32) on which triangular shock absorber blocks (34) are rendered integral and correspond to half one shock absorber block (33) cut along its height.

4. Device according to claim 2, wherein the elongation of a shock absorber unit (3) via the sliding of the tube (31) on the rod (30) is limited by a chain (35) rendered integral via its extremities with firstly the crosspiece (2) and secondly with said tube (31).

5. Device according to claim 1, wherein the device (4) for hooking a bunch of bananas (5) comprises a cross-shaped hook mounted pivoting via one of its extremities on a bracket (40) radially integral with the crosspiece (2), said hook (41) being introduced into an opening made in the trunk of a bunch of bananas (5) whose weight locks the hooking device by bringing the non-pivoting extremity of said hook into contact with said crosspiece (2).
